# EUROPEAN PATENT APPLICATION

(11) **EP 4 819 013 A1**
(43) Date of publication of application: **07.10.2026**
(21) Application number: 26161521.5
(22) Date of filing: 02.03.2026
(51) Int. Cl.: G06Q 20/20, G07G 1/00, G07G 3/00

(54) **INFORMATION PROCESSING PROGRAM, INFORMATION PROCESSING DEVICE, AND INFORMATION PROCESSING SYSTEM**

(30) Priority: 04.04.2025 JP 2025062649
(71) Applicant: FUJITSU LIMITED, Kawasaki-shi, Kanagawa 211-8588 (JP)
(72) Inventor: TAKAHASHI, Jun, Kawasaki-shi, Kanagawa, 211-8588 (JP)
(74) Representative: Hoffmann Eitle

(57) **Abstract**

An information processing program causes a computer to execute a process including acquiring video having a scan area of a self-checkout terminal for scanning a barcode of a product analyzing the acquired video to detect an action of a user holding a plurality of products in the scan area of the self-checkout terminal setting either the self-checkout terminal or a management terminal that monitors the self-checkout terminal as a terminal to be notified based on an analysis result of a type of an overlapping state of the plurality of products when the action of the user holding the plurality of products is detected generating alert image information corresponding to the type of the overlapping state of the plurality of products; and causing the generated alert image information to be displayed on a display screen of the terminal set as a notification destination.

## Description

### FIELD

The embodiment discussed herein is related to an information processing program and the like.

### BACKGROUND

In recent years, in the retail field, the introduction of self-checkouts has been advancing, in which a checkout user scans barcodes of products to be purchased by himself or herself and makes a payment.

On the other hand, it has been pointed out that self-checkouts can become a hotbed for fraudulent acts such as shoplifting due to the lack of public attention, and there is a demand for detecting improper use of self-checkouts. For example, the improper use of self-checkouts includes an act of pretending to scan a product and an act of scanning products while they are overlapped.

As a conventional technique for detecting improper use of the self-checkouts, there is a technique in which a camera captures an image of a person, a product, and a barcode of the product, and an abnormality is notified to an administrator by determining whether the product held by the person matches the product whose barcode has been scanned.
Patent Document 1: Japanese Laid-open Patent Publication No. 2024-82167
Patent Document 2: Japanese Laid-open Patent Publication No. 2023-31766
Patent Document 3: Japanese Laid-open Patent Publication No. 2024-136526

However, in the above-described conventional technique, there is a problem in that appropriate action is taken against the improper use of the self-checkouts.

For example, in the conventional technique, since it is premised that a person takes out one product, in a case where a plurality of products is taken out, the determination accuracy decreases, and the improper use of the self-checkouts is detected.

On the other hand, it is difficult to distinguish whether the improper use of the self-checkout is a "mistake" or "intentional", and if an abnormality is notified to the administrator each time the improper use is suspected, a confirmation task occurs with each notification, thereby increasing the burden on the administrator.

Accordingly, it is an object in one aspect of an embodiment of the invention to provide an information processing program, an information processing method, and an information processing device that can reduce the burden on an administrator while suppressing improper use of the self-checkout.

### SUMMARY

An information processing program causes a computer to execute a process including acquiring video having a scan area of a self-checkout terminal for scanning a barcode of a product analyzing the acquired video to detect an action of a user holding a plurality of products in the scan area of the self-checkout terminal setting either the self-checkout terminal or a management terminal that monitors the self-checkout terminal as a terminal to be notified based on an analysis result of a type of an overlapping state of the plurality of products when the action of the user holding the plurality of products is detected generating alert image information corresponding to the type of the overlapping state of the plurality of products and causing the generated alert image information to be displayed on a display screen of the terminal set as a notification destination.

### BRIEF DESCRIPTION OF DRAWINGS

FIG. 1 is a diagram for illustrating a self-checkout according to the present example;
FIG. 2 is a diagram for illustrating a first pattern;
FIG. 3 is a diagram for illustrating a second pattern;
FIG. 4 is a diagram for illustrating a third pattern;
FIG. 5 is a diagram for illustrating a fourth pattern;
FIG. 6 is a diagram for illustrating a fifth pattern;
FIG. 7 is a diagram illustrating a configuration of an information processing system according to the present example;
FIG. 8 is a diagram (1) illustrating an example of alert image information;
FIG. 9 is a diagram (2) illustrating an example of alert image information;
FIG. 10 is a functional block diagram illustrating a configuration of an information processing device according to the present example;
FIG. 11 is a diagram illustrating an example of a data structure of a product information table;
FIG. 12 is a diagram illustrating an example of a data structure of a tracking table;
FIG. 13 is a diagram illustrating an example of a scan area of the self-checkout;
FIG. 14 is a diagram (1) for supplementarily illustrating CLIP;
FIG. 15 is a diagram (2) for supplementarily illustrating CLIP;
FIG. 16 is a flowchart illustrating a procedure of a determination process of a determination unit;
FIG. 17 is a flowchart illustrating a processing procedure of the information processing device according to the present example; and
FIG. 18 is a diagram illustrating an example of a hardware configuration of a computer that implements functions similar to those of the information processing device according to the example.

### DESCRIPTION OF EMBODIMENT

Preferred embodiments of the present invention will be explained with reference to accompanying drawings. Note that the present invention is not limited by the examples.

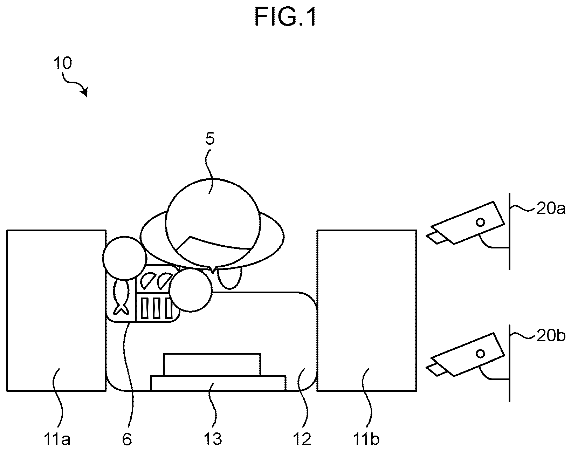

An example of a self-checkout related to the present example will be described. FIG. 1 is a diagram for illustrating the self-checkout according to the present example. As illustrated in FIG. 1, the self-checkout 10 includes product placement areas 11a and 11b and a checkout station 12. The product placement area 11a is a place where a product before scanning is placed. The product placement area 11b is a place where a product after scanning is placed.

A fixed scanner 13 is arranged on the checkout station 12. The scanner 13 is a device that scans a barcode attached to a product.

A user 5 executes scanning of a product by holding a barcode of the product over the scanner 13. An area where the user 5 executes scanning is defined as a scan area. For example, in the case of using the self-checkout 10, it is assumed that the user 5 is requested from the store side to scan the products placed in the product placement area 11a one by one, and place the products in the product placement area 11b after scanning. Note that the positions of the product placement area 11a and the product placement area 11b may be horizontally reversed.

Cameras 20a and 20b are cameras that capture images of how the user 5 scans a product 6 from different directions. For example, the camera 20a captures the checkout station 12 from above. The camera 20b captures the checkout station 12 from obliquely above. In the present example, the cameras 20a and 20b are illustrated; however, other cameras may be further included. In a case where the cameras 20a and 20b are not specifically distinguished in the following description, they are collectively referred to as "camera 20".

Next, scan patterns that may indicate the possibility of improper use of the self-checkout will be described. In the present example, first to fifth patterns described below are assumed as an example.

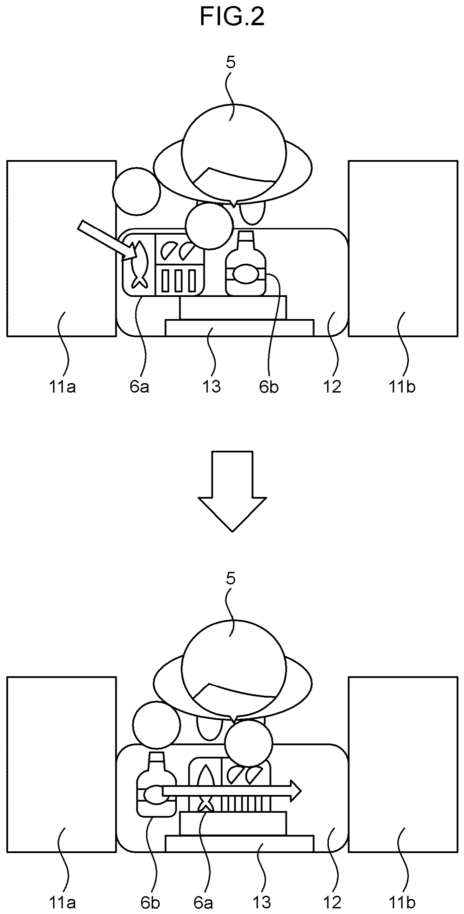

FIG. 2 is a diagram for illustrating a first pattern. In the example illustrated in FIG. 2, the user 5 temporarily places products 6a and 6b (unscanned products) from the product placement area 11a onto the checkout station 12. Thereafter, the user 5 scans the products 6a and 6b placed on the checkout station 12 one by one, and places the products 6a and 6b on the product placement area 11b. The scan of the first pattern scans the products 6a and 6b, and can be regarded as not improper.

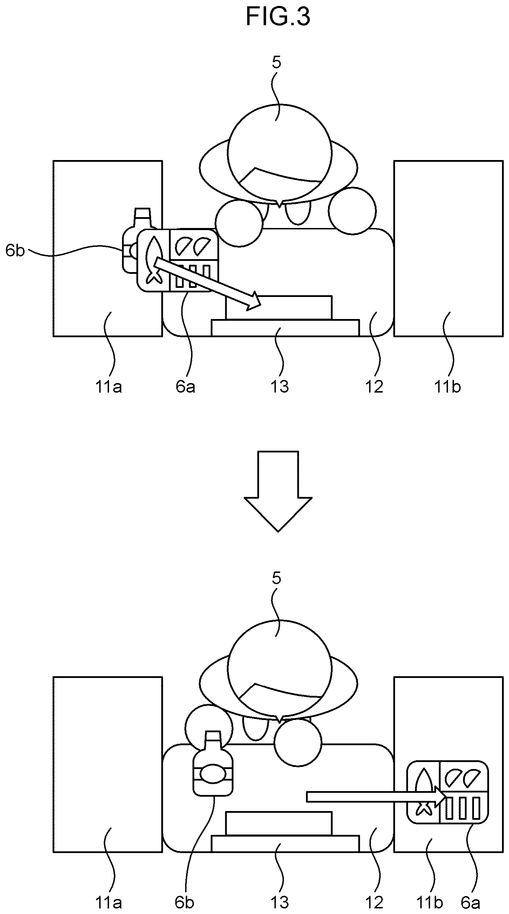

FIG. 3 is a diagram for illustrating a second pattern. In the example illustrated in FIG. 3, the user 5 takes out the products 6a and 6b (unscanned products) in the product placement area 11a in an overlapped manner. Thereafter, the user 5 scans the overlapped products 6a and 6b one by one on the checkout station 12, and places the products 6a and 6b on the product placement area 11b. In the scan of the second pattern, the products 6a and 6b are scanned, and it can be considered that the scan is not improper.

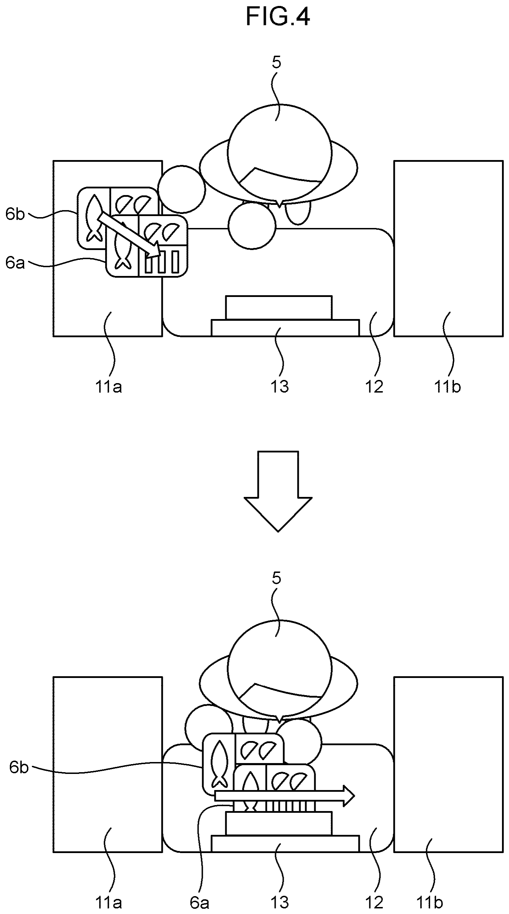

FIG. 4 is a diagram for illustrating a third pattern. In the example illustrated in FIG. 4, the user 5 takes out the products 6a and 6b (unscanned products) in the product placement area 11a in an overlapped manner. Thereafter, the user 5 scans the overlapped products 6a and 6b only once on the checkout station 12 (for example, only the product 6a is scanned, and the product 6b is not scanned), and places the products 6a and 6b on the product placement area 11b. The fourth pattern can be regarded as improper since a part of the overlapped products (for example, the product 6b) is not scanned.

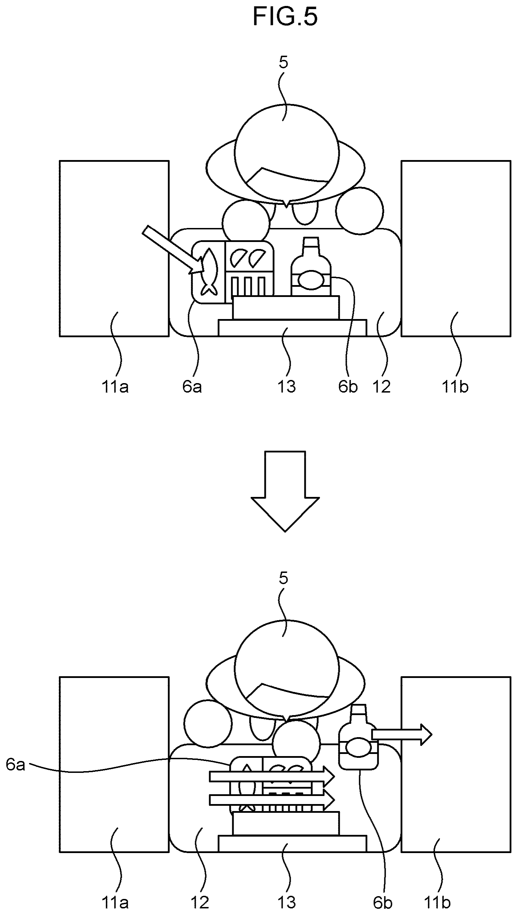

FIG. 5 is a diagram for illustrating a fourth pattern. In the example illustrated in FIG. 5, the user 5 temporarily places the products 6a and 6b (unscanned products) in the product placement area 11a on the checkout station 12. Thereafter, the user 5 scans the product 6a a plurality of times (for example, twice), and places the products 6a and 6b on the product placement area 11b. The fourth pattern can be regarded as improper since the barcode of the product 6b is substituted with the barcode of the product 6a, and the scan of the product 6b is being feigned.

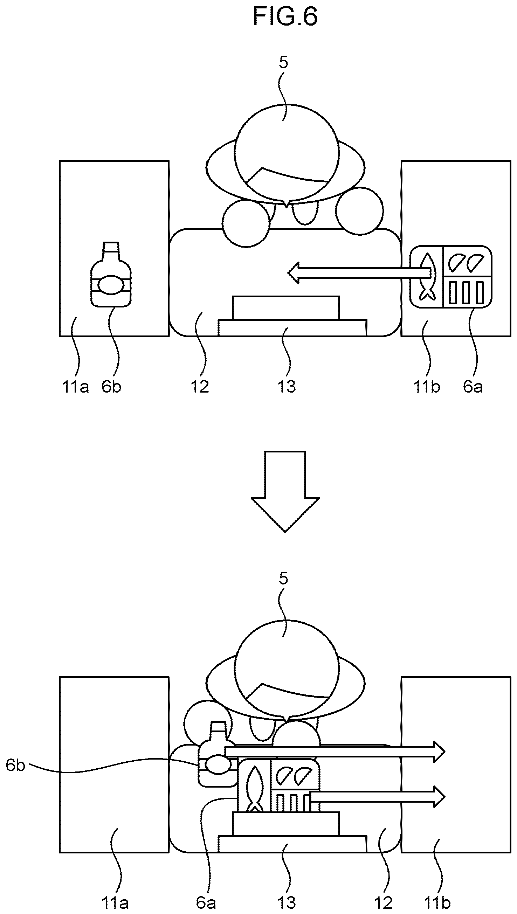

FIG. 6 is a diagram for illustrating a fifth pattern. In the example illustrated in FIG. 6, the user 5 takes out the scanned product 6a in the product placement area 11b and takes out the unscanned product 6b in the product placement area 11a. Thereafter, the user 5 rescans the product 6a and then places the products 6a and 6b on the product placement area 11b. The fourth pattern can be regarded as improper since the rescan of the product 6a is being used to feign the scan of the product 6b.

The first to fifth patterns have been described above.

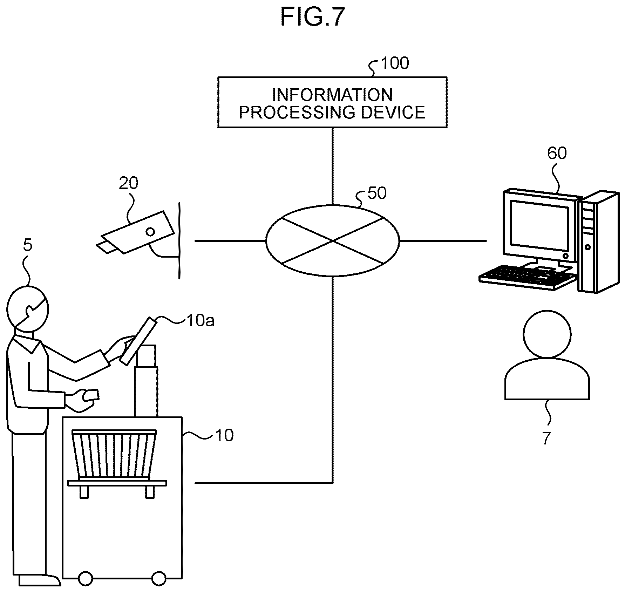

Next, a configuration of the information processing system according to the present example will be described. FIG. 7 is a diagram illustrating a configuration of an information processing system according to the present example. As illustrated in FIG. 7, the information processing system includes the self-checkout 10, the camera 20, a management terminal 60, and an information processing device 100. The self-checkout 10, the camera 20, the management terminal 60, and the information processing device 100 are mutually connected via a network 50.

The self-checkout 10 is a terminal used by the user 5 to purchase a product. The self-checkout 10 includes a display screen 10a for notifying the user 5 of various types of information. The self-checkout 10 transmits a scan result by the user 5 to the information processing device 100. For example, the scan result includes barcode information. Other descriptions of the self-checkout 10 are similar to those of the self-checkout 10 described in FIG. 1. Note that the information processing system according to the present example may include a plurality of self-checkouts in addition to the self-checkout 10. The self-checkout 10 corresponds to a self-checkout terminal.

The camera 20 corresponds to the cameras 20a and 20b illustrated in FIG. 1. The camera 20 captures a video of the self-checkout 10 and transmits data of the captured video to the information processing device 100. In the following description, the video data transmitted from the camera 20 to the information processing device 100 is referred to as "video information". It is assumed that the video information includes the video of the scan area.

The video information includes a plurality of frames in time series. Each frame is assigned a frame number in ascending order of time series. One frame is a still image captured by the camera 20 at a certain timing. Time data may be assigned to each frame.

The management terminal 60 is a terminal device used by an administrator 7. The management terminal 60 is a personal computer (PC), a notebook PC, a tablet terminal, or the like. The management terminal 60 displays information transmitted from the information processing device 100.

The information processing device 100 analyzes video information acquired from the camera 20 to detect an action of the user 5 holding a plurality of products in a scan area of the self-checkout 10. The information processing device 100 sets, based on an analysis result of a type of an overlapping state of a plurality of products when the action of the user 5 holding the plurality of products is detected, at least one of the self-checkout 10 and the management terminal 60 as a notification destination. The information processing device 100 generates alert image information according to the type of the overlapping state, and transmits and displays the alert image information to the set notification destination.

For example, in a case where the analysis result of the type of the overlapping state of the plurality of products corresponds to the first pattern or the second pattern, the information processing device 100 sets the self-checkout 10 as the notification destination. The information processing device 100 displays alert image information corresponding to the first pattern and the second pattern on the display screen 10a of the self-checkout 10.

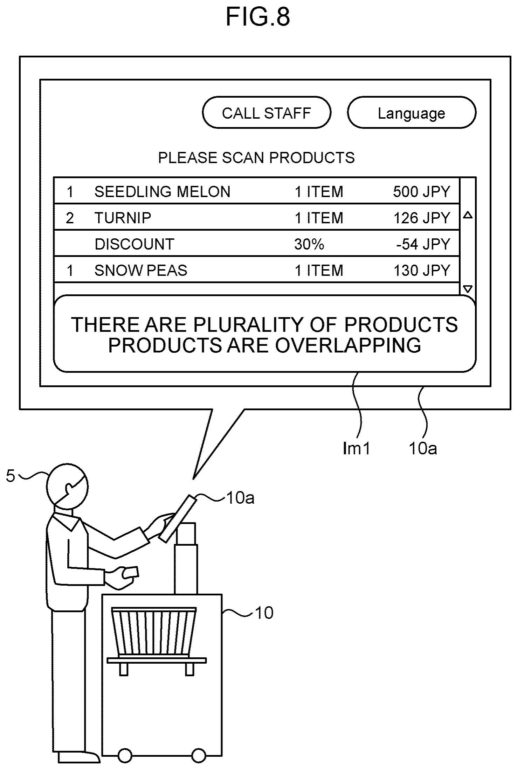

FIG. 8 is a diagram (1) illustrating an example of alert image information. As illustrated in FIG. 8, the information processing device 100 displays an alert image Im1 on the display screen 10a as alert image information corresponding to the first pattern and the second pattern. For example, character strings such as "There are plurality of products. Products are overlapping" are displayed on the alert image Im1. The user 5 can continue operating the self-checkout 10 even while the alert image Im1 is being displayed.

As described with reference to FIGS. 2 and 3, although the first pattern and the second pattern differ from the scanning method adoptedby the store, they are not improper use of the self-checkout. Therefore, the user 5 can be requested to change the scanning method. In addition, it is possible to prevent a notification of improper use from being sent to the management terminal 60 despite the fact that the operation is not improper use of the self-checkout, thereby reducing the burden on the administrator 7.

On the other hand, in a case where the analysis result of the type of the overlapping state of the plurality of products corresponds to any one of the third pattern, the fourth pattern, and the fifth pattern, the information processing device 100 sets both the self-checkout 10 and the management terminal 60 as notification destinations. The information processing device 100 causes alert image information corresponding to the third to fifth patterns to be displayed on the display screen 10a of the self-checkout 10 and on the display screen of the management terminal 60.

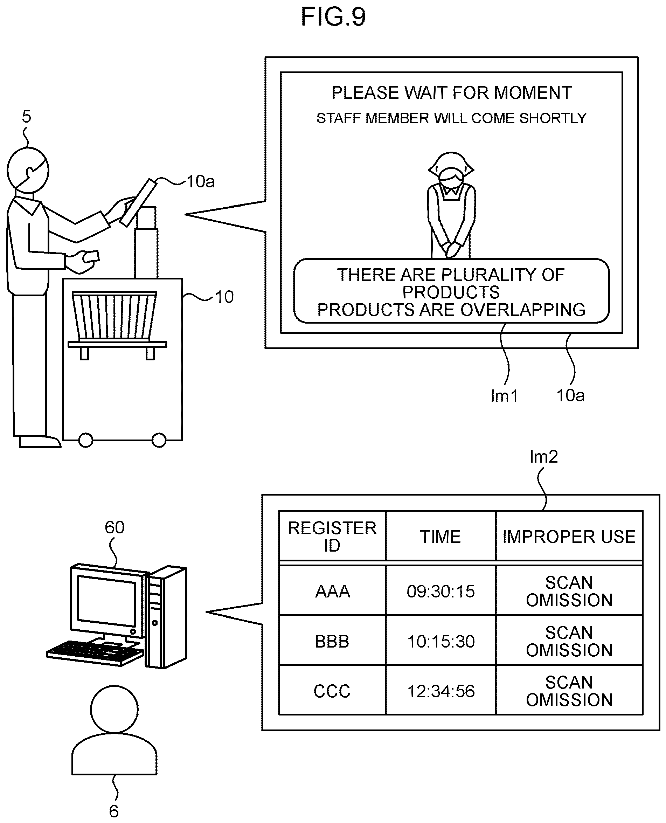

FIG. 9 is a diagram (2) illustrating an example of alert image information. As illustrated in FIG. 9, the information processing device 100 causes the alert image Im1 to be displayed on the display screen 10a of the self-checkout 10 as alert image information corresponding to any of the third to fifth patterns. Although the content of the alert image Im1 is the same as that of the alert image Im1 in FIG. 8, the information processing device 100 may control the self-checkout 10 to lock the operation of the self-checkout 10.

In addition, the information processing device 100 also causes an alert image Im2 to be displayed on a display screen of the management terminal 60 as alert image information corresponding to any of the third to fifth patterns. For example, the alert image Im2 displays a table associating a register ID, a time, and an improper use. The register ID indicates information for identifying a self-checkout. The time indicates a time at which the improper use was detected. The improper use indicates the content of the improper use in the self-checkout.

As described with reference to FIGS. 4 to 6, the third to fifth patterns can be regarded as improper use of the self-checkout. In this case, the information processing device 100 can inform the administrator 7 of the occurrence of the improper use by causing the management terminal 60 to display the alert image information.

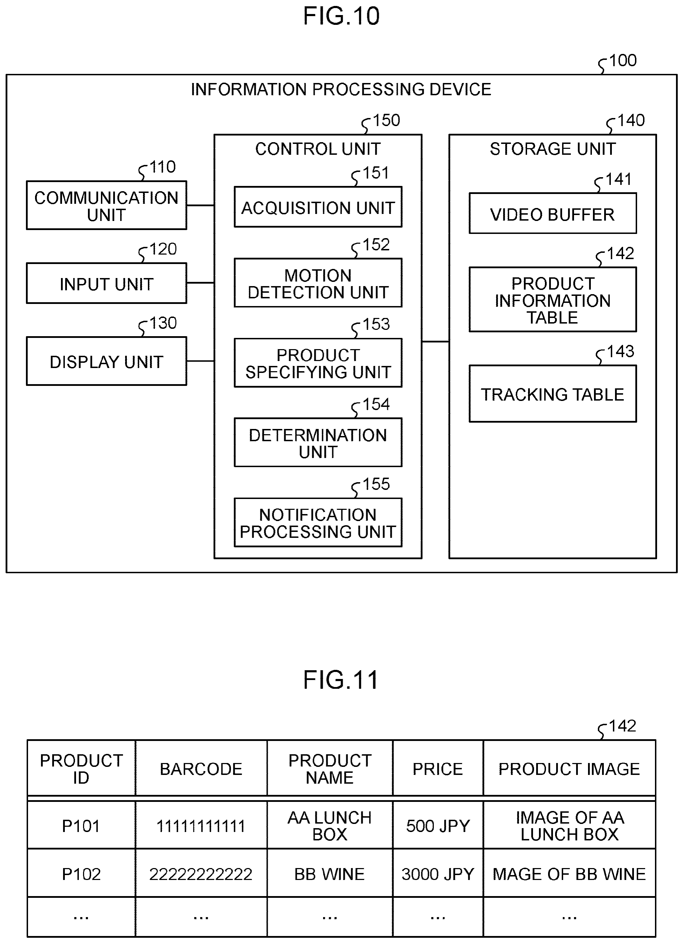

Next, a configuration example of the information processing device 100 according to the present example will be described. FIG. 10 is a functional block diagram illustrating a configuration of an information processing device according to the present example. As illustrated in FIG. 10, the information processing device 100 includes a communication unit 110, an input unit 120, a display unit 130, a storage unit 140, and a control unit 150.

The communication unit 110 executes data communication with the self-checkout 10, the camera 20, and the management terminal 60 via the network 50. For example, the communication unit 110 receives the video information from the camera 20. The communication unit 110 receives a scan result from the self-checkout 10.

The input unit 120 is an input device that inputs various types of information to the control unit 150 of the information processing device 100. For example, the administrator may operate the input unit 120 to update a product information table 142 to be described later.

The display unit 130 is a display device that displays information output from the control unit 150.

The storage unit 140 includes a video buffer 141, the product information table 142, and a tracking table 143. The storage unit 140 is a memory or the like.

The video buffer 141 stores video information captured by the camera 20. The video buffer 141 stores video information for each of the cameras 20a and 20b. For example, a camera ID for identifying a camera is assigned to the video information, and the position of the camera 20 and the self-checkout 10 captured by the camera can be identified from the camera ID.

The product information table 142 holds various types of information regarding products. FIG. 11 is a diagram illustrating an example of a data structure of a product information table. As illustrated in FIG. 11, the product information table 142 includes a product ID, a barcode, a product name, a price, a product image, and the like. The product ID is a number for identifying a product. The barcode is a barcode of a product. The product name is a name of a product. The price is the price (value) of the product. The product image is an image of a product.

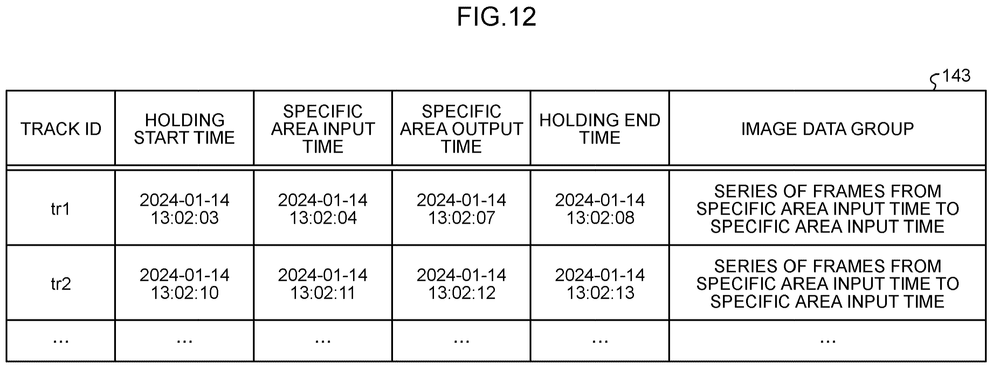

The tracking table 143 holds information regarding the movement of the product generated by a motion detection unit 152 described later. FIG. 12 is a diagram illustrating an example of a data structure of a tracking table. As illustrated in FIG. 12, the tracking table 143 includes a track ID, a holding start time, a specific area input time, a specific area output time, a holding end time, and an image data group.

The track ID is information for identifying each track at the time of tracking. The track is a moving route of a product or the like. The holding start time is a time at which the user holds the product. The specific area input time is the time at the moment when the held product is input to the specific area. The specific area is a scan area. The specific area output time is the time at the moment when the held product is output from the specific area. The image data group is a frame from the specific area input time to the specific area output time.

The control unit 150 includes an acquisition unit 151, the motion detection unit 152, a product specifying unit 153, a determination unit 154, and a notification processing unit 155. The control unit 150 is a central processing unit (CPU), a graphics processing unit (GPU), or the like.

The acquisition unit 151 acquires the video information from the camera 20, and stores the acquired video information in the video buffer 141. For example, the acquisition unit 151 stores the camera ID and the video information in association with each other in the video buffer 141.

The acquisition unit 151 acquires a scan result from the self-checkout 10 and outputs the acquired scan result to the product specifying unit 153.

By analyzing the video information stored in the video buffer 141, the motion detection unit 152 detects the motion of the user holding a plurality of products in the scan area of the self-checkout 10, and stores the information on the motion of the product as the detection result in the tracking table 143.

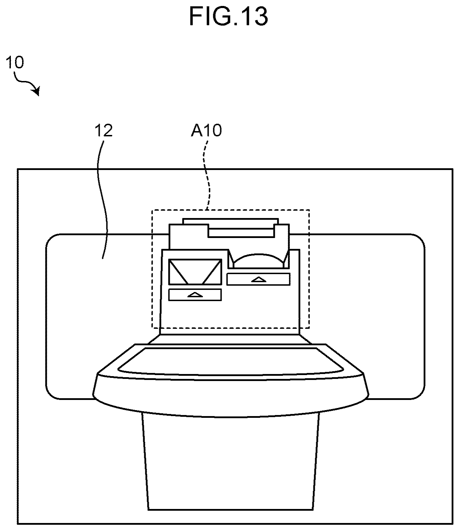

FIG. 13 is a diagram illustrating an example of a scan area of the self-checkout. As illustrated in FIG. 13, a scan area A10 is set as an area where a barcode around the checkout station 12 can be scanned. The scan area A10 may be set in advance by an administrator or the like.

For example, the motion detection unit 152 executes detection of holding of a product by the user, tracking of the product, and detection of a moving route of the same product.

The motion detection unit 152 detects the holding of the product by the user from the video information using a human object interaction detection (HOID) technology. More specifically, the motion detection unit 152 detects a bounding box of a person, a bounding box of a product, and a reliability score for an action label of "Hold" by inputting the video information to a model such as QPIC. For example, QPIC is disclosed in the literature "M. Morita, et al. "QPIC: Query-Based Pairwise Human-Object Interaction Detection with Image-Wide Contextual Information", CVPR 2021.".

The motion detection unit 152 specifies a time at which the reliability score becomes equal to or greater than the threshold value as the holding start time. The motion detection unit 152 tracks the same person or product across a plurality of frames, and, after the confidence score becomes equal to or greater than a threshold value, specifies a time when the reliability score falls below the threshold value as a holding end time.

The motion detection unit 152 uses Deep simple online and realtime tracking (SORT) to track the product held by the user. For example, the motion detection unit 152 acquires, for each frame, an appearance characteristic of an image of an object (an image in a bounding box of the object) output from a model such as QPIC, and tracks a position (coordinates) of the object at which similarity of the appearance characteristic is equal to or greater than a threshold value, thereby tracking the same product. The motion detection unit 152 assigns the same tracking ID to the moving route of the same product.

The motion detection unit 152 compares the moving route of the product with the scan area A10 illustrated in FIG. 13, and specifies the time of the moment when the position of the product is input to the scan area A10 as the specific area input time. The motion detection unit 152 specifies the time at the moment when the position of the product is output from the scan area A10 as the specific area output time.

The motion detection unit 152 specifies the track ID, the holding start time, the specific area input time, the specific area output time, and the holding end time by executing the above process, and stores each specified information in the tracking table 143. In addition, the motion detection unit 152 stores frames (image data group) from the specific area input time to the specific area output time in the video information in the tracking table 143 in association with the track ID.

The motion detection unit 152 executes the tracking on each product held by the person, thereby storing the track ID, the holding start time, the specific area input time, the specific area output time, the holding end time, and the image data group of each product in the tracking table 143. Although not illustrated, the motion detection unit 152 stores information in which each position of the track is associated with the time in the tracking table 143 in association with the track ID.

The product specifying unit 153 specifies the product information of the scanned product based on the barcode of the scan result and the product information table 142. For example, the product specifying unit 153 compares the barcode of the scan result with the product information table 142 illustrated in FIG. 11, and specifies the product name, the price, and the product image corresponding to the barcode of the scan result as the product information. The product specifying unit 153 outputs the product information to the determination unit 154.

The determination unit 154 determines whether a plurality of products are present on the checkout station 12 based on the tracking table 143, and determines whether the plurality of products overlap in a case where the plurality of products are present on the checkout station 12. The determination unit 154 outputs the determination result to the notification processing unit 155.

The process in which the determination unit 154 determines whether a plurality of products are present on the checkout station 12 will be described more specifically. The determination unit 154 arranges the tracks of the respective products in time series, and determines whether the position of each product is included in the area of the checkout station 12 at each time. The area of the checkout station 12 is designated in advance. The determination unit 154 simultaneously counts the number of products included in the area of the checkout station 12 at an arbitrary time or within a certain time, and determines that a plurality of products are present in the checkout station 12 in a case where the number of products is 2 or more.

The process in which the determination unit 154 determines whether a plurality of products are overlapped will be described more specifically. The determination unit 154 uses a model of contrastive language-image pretraining (CLIP) or the like trained in advance. The model of CLIP is trained using a large number of image and language pairs, and learns how images match words (text) by mapping images and text into a common vector space. In the following description, the model of CLIP may be simply referred to as CLIP.

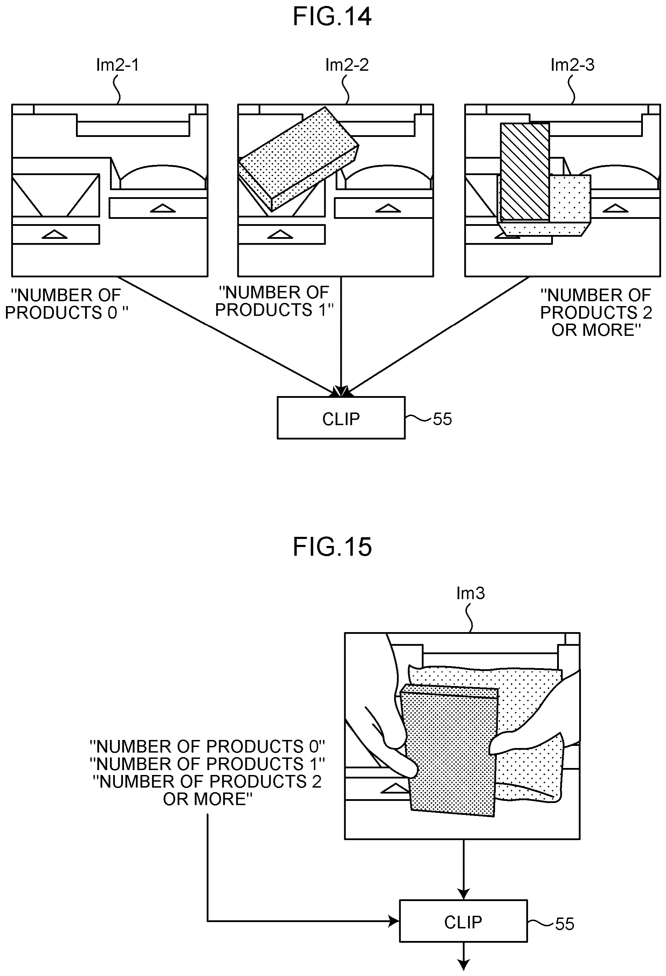

FIGS. 14 and 15 are diagrams for supplementarily illustrating CLIP. First, FIG. 14 will be described. In FIG. 14, training of CLIP 55 will be described. Here, for convenience, the device for training the CLIP 55 is referred to as a training device. The training device calculates image vectors of images Im2-1, Im2-2, and Im2-3. The training device calculates text vectors of the texts "number of products 0", "number of products 1", and "number of products 3", respectively. The training device compares the image vectors of the CLIP 55 images Im2-1 to Im2-3 with the text vectors of the texts "number of products 0", "number of products 1", and "number of products 3", respectively, and trains the CLIP 55 so that the similarity of the correct pair is high and the others are low. The correct pair is a pair of the image Im2-1 and the text "number of products 0", a pair of the image Im2-2 and the text "number of products 1", and a pair of the image Im2-3 and the text "number of products 2".

Next, FIG. 15 will be described. In FIG. 15, estimation of the number of products using the trained CLIP 55 will be described. The determination unit 154 inputs the image vector of the frame (image Im3) and the text vector of the text "number of products 0" to the CLIP 55 and calculates a score. The determination unit 154 inputs the image vector of the frame (image Im3) and the text vector of the text "number of products 1" to the CLIP 55 and calculates a score. The determination unit 154 inputs the image vector of the frame (image Im3) and the text vector of the text "number of products 2" to the CLIP 55 and calculates a score. For example, in a case where the score of the image vector of the frame (image Im3) and the text vector of the text "number of products 2" is larger than other scores, the determination unit 154 determines that the number of products is 2. In this case, the determination unit 154 determines that a plurality of products are overlapped.

In FIGS. 14 and 15, the case of the number of products 0 to 2 has been described for convenience of description; however, learning and estimation can be similarly performed even in a case where the number of products is 3 or more.

Note that, in the above example, the determination unit 154 determines whether a plurality of products are overlapping using the CLIP 55; however, it is not limited thereto, and the determination unit may determine whether a plurality of products overlap by performing matching of product images included in the product information or the like.

Subsequently, in a case where it is determined that the plurality of products do not overlap, the determination unit 154 determines whether the plurality of products have been correctly scanned. For example, in a case where the image data group corresponding to the track ID of the tracking table 143 matches the product image of the product information (the product image for which scanning has been completed), the determination unit 154 determines that the scan of the product corresponding to the track ID has been correctly scanned.

In a case of determining that a plurality of products are overlapped, the determination unit 154 determines whether an unscanned product and a scanned product overlap. Whether the product has not been scanned may be determined using the product image of the product information in the same manner as described above.

When it is determined that the unscanned product and the scanned product are not overlapped, the determination unit 154 determines whether the overlapped unscanned product has been correctly scanned. Whether the product has not been scanned may be determined using the product image of the product information in the same manner as described above.

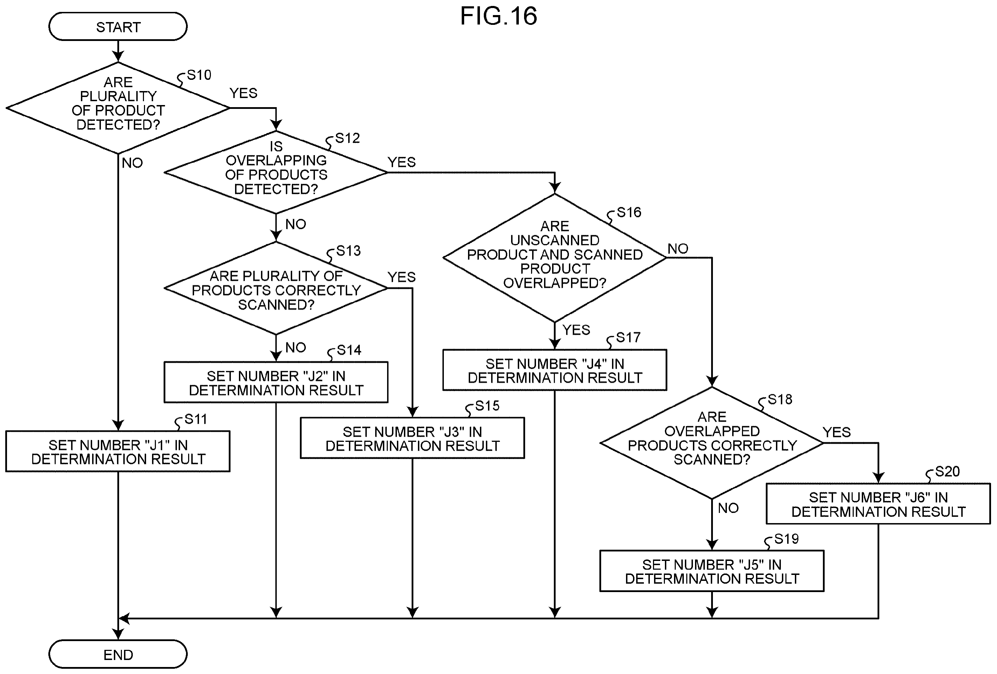

FIG. 16 is a flowchart illustrating a procedure of a determination process of a determination unit. The determination result number illustrated in FIG. 16 is a number for uniquely identifying the determination result. As illustrated in FIG. 16, in a case where the plurality of products are not detected (Step S10, No), the determination unit 154 sets the number "J1" in the determination result (Step S11).

In a case where a plurality of products are detected (Step S10, Yes), the determination unit 154 proceeds to Step S12. In a case where overlapping of the products is not detected (Step S12, No), the determination unit 154 proceeds to Step S13. In a case where a plurality of products are not correctly scanned (Step S13, No), the determination unit 154 sets a number "J2" in the determination result (step S14). In a case where a plurality of products are correctly scanned (Step S13, Yes), the determination unit 154 sets a number "J3" in the determination result (step S15).

On the other hand, in a case where overlapping of the products is detected (Step S12, Yes), the determination unit 154 proceeds to Step S16. In a case where the unscanned product and the scanned product are overlapped (Step S16, Yes), the determination unit 154 sets a number "J4" in the determination result (Step S17).

On the other hand, in a case where the unscanned product and the scanned product are not overlapped (Step S16, No), the determination unit 154 proceeds to Step S18. In a case where the overlapped product has not been correctly scanned (Step S18, No), the determination unit 154 sets a number "J5" in the determination result (Step S19). In a case where the overlapped products have been correctly scanned (Step S18, Yes), the determination unit 154 sets a number "J6" in the determination result (Step S20).

As described with reference to FIG. 16, the determination unit 154 sets any one of numbers J1 to J6 in the determination result, and outputs the determination result to the notification processing unit 155.

The notification processing unit 155 sets either the self-checkout 10 or the management terminal 60 as a notification destination terminal based on the determination result by the determination unit 154. The notification processing unit 155 generates alert image information according to the type of the overlapping state of the products, and displays the alert image information on the display screen of the set notification destination. Hereinafter, the process of the notification processing unit 155 will be described more specifically.

In a case where the number "J1" is set in the determination result, the notification processing unit 155 sets the notification destination to the "self-checkout 10". In this case, the notification processing unit 155 does not generate the alert image information.

In a case where the number "J2" is set in the determination result, the notification processing unit 155 sets the notification destination to the "management terminal 60". In this case, the notification processing unit 155 generates the alert image information "SCAN OMISSION" and displays the alert image information on the display screen of the notification destination. For example, in a case where the number "J2" is set in the determination result, it means that the fourth pattern is detected.

In a case where the number "J3" is set in the determination result, the notification processing unit 155 sets "self-checkout" as the notification destination. In this case, the notification processing unit 155 generates the alert image information "product overlap" and displays the alert image information on the display screen of the notification destination. For example, in a case where the number "J3" is set in the determination result, it means that the first pattern is detected.

In a case where the number "J4" is set in the determination result, the notification processing unit 155 sets the notification destination to the "management terminal 60". In this case, the notification processing unit 155 generates the alert image information "overlapping of scanned products" and displays the alert image information on the display screen of the notification destination. For example, in a case where the number "J4" is set in the determination result, it means that the fifth pattern is detected.

In a case where the number "J5" is set in the determination result, the notification processing unit 155 sets the notification destination to the "management terminal 60". In this case, the notification processing unit 155 generates the alert image information "SCAN OMISSION" and displays the alert image information on the display screen of the notification destination. For example, in a case where the number "J5" is set in the determination result, it means that the third pattern is detected.

In a case where the number "J6" is set in the determination result, the notification processing unit 155 sets "self-checkout" as the notification destination. In this case, the notification processing unit 155 generates the alert image information "product overlap" and displays the alert image information on the display screen of the notification destination. For example, in a case where the number "J6" is set in the determination result, it means that the second pattern is detected.

Here, in this case, in a case where the determination result number is set to "J3" or "J6", since it does not correspond to an improper use of the self-checkout 10, the notification processing unit 155 may allow the user 5 to continue operating the self-checkout 10. Furthermore, in a case where the determination result in which the number "J3" or "J6" is set occurs a predetermined number of times or more within a predetermined time, the notification processing unit 155 may transition the alert image information. For example, the notification processing unit 155 transitions the alert image information "product overlap" displayed on the display screen of the self-checkout 10 to alert screen information "Please stop payment and wait for AA".

In addition, in a case where "J2", "J4", "J5", and "J6" are set as the determination result number, the notification processing unit 155 sets the notification destination to the management terminal 60; however, it is not limited thereto. For example, the notification processing unit 155 may further set the self-checkout 10 as the notification destination, display the alert image information as illustrated in Im1 of FIG. 9 on the self-checkout 10, and stop the handling of the self-checkout 10 by the user 5.

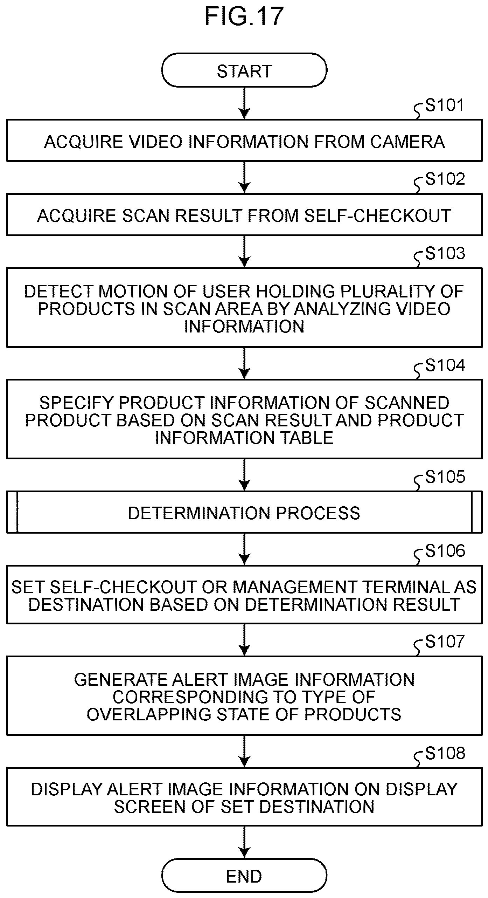

Next, an example of the process procedure of the information processing device 100 according to the present example will be described. FIG. 17 is a flowchart illustrating a processing procedure of the information processing device according to the present example. As illustrated in FIG. 17, the acquisition unit 151 of the information processing device 100 acquires video information from the camera 20 (Step S101). The acquisition unit 151 acquires a scan result from the self-checkout 10 (Step S102).

The motion detection unit 152 of the information processing device 100 detects the motion of the user holding the plurality of products in the scan area by analyzing the video information (Step S103). The product specifying unit 153 of the information processing device 100 specifies the product information of the scanned product based on the scan result and the product information table 142 (Step S104).

The determination unit 154 of the information processing device 100 executes the determination process (Step S105). The procedure of the determination processing in Step S105 is similar to the procedure described in FIG. 16.

The notification processing unit 155 of the information processing device 100 sets either the self-checkout 10 or the management terminal 60 as the notification destination based on the determination result (Step S106). The notification processing unit 155 generates alert image information corresponding to the type of the overlapping state of the products (Step S107). The notification processing unit 155 displays the alert image information on the display screen of the set notification destination (Step S108).

Next, effects of the information processing device 100 according to the present example will be described. The information processing device 100 analyzes video information acquired from the camera 20 to detect an action of the user 5 holding a plurality of products in a scan area of the self-checkout 10. The information processing device 100 sets, based on an analysis result of a type of an overlapping state of a plurality of products when the action of the user 5 holding the plurality of products is detected, at least one of the self-checkout 10 and the management terminal 60 as a notification destination. The information processing device 100 generates alert image information according to the type of the overlapping state, and transmits and displays the alert image information to the set notification destination. As a result, it is possible to reduce the burden on the administrator while suppressing the improper use of the self-checkouts.

The information processing device 100 sets the management terminal 60 as a notification destination when it is detected that a plurality of unscanned products have passed through the scan area in an overlapping state. As a result, it is possible to notify the management terminal 60 of the improper use of the self-checkout corresponding to the third pattern.

The information processing device 100 sets the management terminal as a notification destination in a case where it is detected that a scanned product has passed through the scan area a plurality of times. As a result, it is possible to notify the management terminal 60 of the improper use of the self-checkout corresponding to the fourth pattern.

The information processing device 100 sets the management terminal as a notification destination in a case where it is detected that a scanned product and an unscanned product have passed through the scan area in an overlapping state. As a result, it is possible to notify the management terminal 60 of the improper use of the self-checkout corresponding to the fifth pattern.

The information processing device 100 sets the self-checkout 10 as a notification destination in a case where it is detected that the user has taken out a plurality of products in an overlapping state and the plurality of products have passed through the scan area in a non-overlapping state. As a result, it is possible to prevent the scan operation of the user 5 corresponding to the first and second patterns from being erroneously notified to the management terminal 60 as an improper operation.

In a case where the user detects an action of taking out a plurality of products in an overlapping manner a predetermined number of times or more, the information processing device 100 notifies the notification destination of the administrator terminal. As a result, it is possible to notify the administrator of the presence of a user who repeats an erroneous operation on the self-checkout 10.

The information processing device 100 determines whether the products overlap by inputting the vector of the image (frame) of the video information and the vector of the text related to the number of products to the CLIP. Accordingly, the overlapping of the products can be accurately determined.

Meanwhile, the processing of the information processing device 100 described above is an example, and the information processing device 100 may execute other processing. For example, the information processing device 100 may not immediately notify the management terminal 60 of alert image information in a case where the improper use of the self-checkout corresponding to any of the third to fifth patterns is detected through the above processing. In a case where any one of the following Conditions (1), (2), and (3) is satisfied, the information processing device 100 notifies the management terminal 60 of the alert image information. The administrator may set any one of the conditions in the information processing device 100.

Condition (1) is a condition that the price of an unscanned product is equal to or more than the first threshold value. Condition (2) is a condition that the cumulative total of the prices of the unscanned products is equal to or more than the second threshold value (the second threshold value is larger than the first threshold value). Condition (3) is a condition that the number of detections of improper use of the self-checkout according to the third to fifth patterns is equal to or greater than a predetermined number of times.

The information processing device 100 may specify the price of an unscanned product in any way. For example, when determining whether a plurality of products have been correctly scanned, the determination unit 154 of the information processing device 100 specifies, as an unscanned product, a product in an image corresponding to a case where, among a group of image data corresponding to a track ID in the tracking table 143, there exists an image of a product that does not match a scanned product image. The determination unit 154 specifies the price of the product having the maximum similarity between the image of the unscanned product and the product image in the product information table 142 as the price of the unscanned product.

Next, an example of a hardware configuration of a computer that implements functions similar to those of the information processing device 100 described in the above example will be sequentially described.

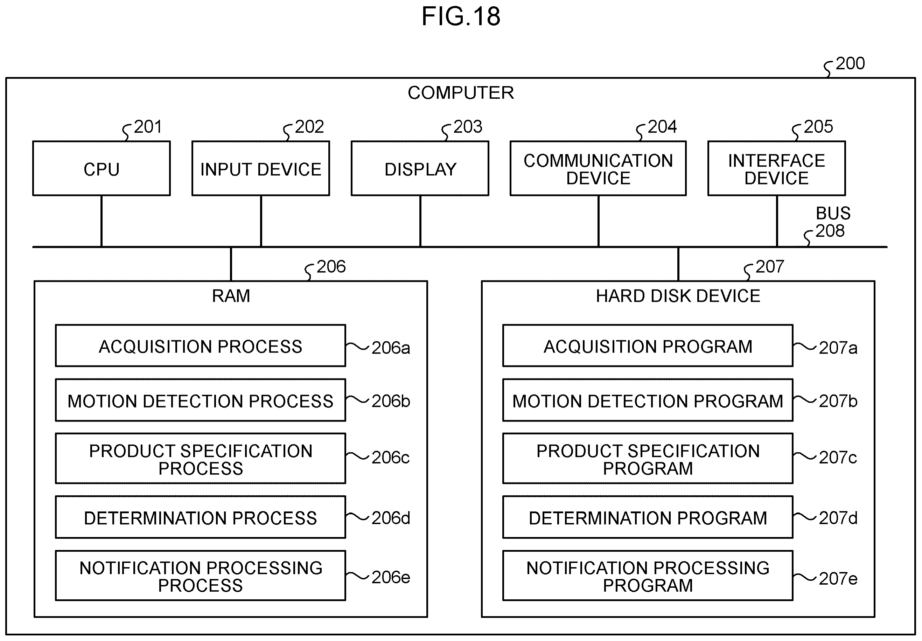

FIG. 18 is a diagram illustrating an example of a hardware configuration of a computer that implements functions similar to those of the information processing device according to the example. As illustrated in FIG. 18, a computer 200 includes a CPU 201 that executes various types of arithmetic processing, an input device 202 that receives an input of data from a user, and a display 203. Furthermore, the computer 200 includes a communication device 204 that exchanges data with the self-checkout 10, the camera 20, the management terminal 60, other external devices, and the like via a wired or wireless network, and an interface device 205. In addition, the computer 200 includes a RAM 206 that temporarily stores various types of information and a hard disk device 207. Each of devices 201 to 207 is connected to a bus 208.

The hard disk device 207 includes an acquisition program 207a, a motion detection program 207b, a product specification program 207c, a determination program 207d, and a notification processing program 207e. In addition, the CPU 201 reads out the programs 207a to 207e and develops the programs in the RAM 206.

The acquisition program 207a functions as an acquisition process 206a. The motion detection program 207b functions as a motion detection process 206b. The product specification program 207c functions as a product specification process 206c. The determination program 207d functions as a determination process 206d. The notification processing program 207e functions as a notification processing process 206e.

The process of the acquisition process 206a corresponds to the process of the acquisition unit 151. The process of the motion detection process 206b corresponds to the process of the motion detection unit 152. The process of the product specification process 206c corresponds to the process of the product specifying unit 153. The process of the determination process 206d corresponds to the process of the determination unit 154. The process of the notification processing process 206e corresponds to the process of the notification processing unit 155.

Each of the programs 207a to 207e does not necessarily have to be stored in the hard disk device 207 from the beginning. For example, each program is stored in a "portable physical medium" such as a flexible disk (FD), a CD-ROM, a DVD, a magneto-optical disk, or an IC card inserted into the computer 200. Then, the computer 200 may read out and execute the programs 207a to 207e.

It is possible to reduce the burden on the administrator while suppressing the improper use of the self-checkouts.

All examples and conditional language recited herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although the embodiment of the present invention has been described in detail, it should be understood that the various changes, substitutions, and alterations could be made hereto without departing from the spirit and scope of the invention.

## Claims

1. An information processing program that causes a computer to execute a process comprising:
acquiring video having a scan area of a self-checkout terminal for scanning a barcode of a product;
analyzing the acquired video to detect an action of a user holding a plurality of products in the scan area of the self-checkout terminal;
setting either the self-checkout terminal or a management terminal that monitors the self-checkout terminal as a terminal to be notified based on an analysis result of a type of an overlapping state of the plurality of products when the action of the user holding the plurality of products is detected;
generating alert image information corresponding to the type of the overlapping state of the plurality of products; and
causing the generated alert image information to be displayed on a display screen of the terminal set as a notification destination.

2. The information processing program according to claim 1, wherein the process further includes setting, based on the analysis result, the management terminal as a notification destination in a case where it is detected that a plurality of unscanned products have passed through the scan area in an overlapping state.

3. The information processing program according to claim 1, wherein the process further includes setting, based on the analysis result, the management terminal as a notification destination in a case where it is detected that a scanned product has passed through the scan area a plurality of times.

4. The information processing program according to claim 1, wherein the process further includes setting, based on the analysis result, the management terminal as a notification destination in a case where it is detected that a scanned product and an unscanned product have passed through the scan area in an overlapping state.

5. The information processing program according to claim 1, wherein the process further includes setting, based on the analysis result, the self-checkout terminal as a notification destination in a case where it is detected that the user has taken out a plurality of products in an overlapping state and the plurality of products have passed through the scan area in a state of not being overlapped.

6. The information processing program according to claim 5, wherein the process further includes adding , based on the analysis result, the management terminal to the notification destination in a case where it is detected that the user has performed an act of taking out a plurality of products in an overlapping state a predetermined number of times or more.

7. The information processing program according to claim 6, wherein the process further includes displaying, on the self-checkout terminal, alert image information for notifying of product overlapping in a case where the user's act of taking out a plurality of products in an overlapping state is less than a predetermined number of times, and displaying, on the self-checkout terminal, alert image information for requesting suspension of payment in a case where the user's act of taking out a plurality of products in an overlapping state is equal to or more than the predetermined number of times.

8. The information processing program according to claim 1, wherein the process further includes determining whether products are overlapping by inputting a vector of an image included in the video and a vector of text relating to a number of products into a model based on contrastive language-image pretraining (CLIP).

9. An information processing device comprising:
a control unit (150) configured to
acquire video having a scan area of a self-checkout terminal for scanning a barcode of a product;
analyze the acquired video to detect an action of a user holding a plurality of products in the scan area of the self-checkout terminal;
set either the self-checkout terminal or a management terminal that monitors the self-checkout terminal as a terminal to be notified based on an analysis result of a type of an overlapping state of the plurality of products when the action of the user holding the plurality of products is detected;
generate alert image information corresponding to the type of the overlapping state of the plurality of products; and
cause the generated alert image information to be displayed on a display screen of the terminal set as a notification destination.

10. The information processing device according to claim 9, wherein the control unit (150) is further configured to set, based on the analysis result, the management terminal as a notification destination in a case where it is detected that a plurality of unscanned products have passed through the scan area in an overlapping state.

11. The information processing device according to claim 9, wherein the control unit (150) is further configured to set, based on the analysis result, the management terminal as a notification destination in a case where it is detected that a scanned product has passed through the scan area a plurality of times.

12. The information processing device according to claim 9, wherein the control unit (150) is further configured to set, based on the analysis result, the management terminal as a notification destination in a case where it is detected that a scanned product and an unscanned product have passed through the scan area in an overlapping state.

13. The information processing device according to claim 9, wherein the control unit (150) is further configured to set, based on the analysis result, the self-checkout terminal as a notification destination in a case where it is detected that the user has taken out a plurality of products in an overlapping state and the plurality of products have passed through the scan area in a state of not being overlapped.

14. The information processing device according to claim 9, wherein the control unit (150) is further configured to determine whether products are overlapping by inputting a vector of an image included in the video and a vector of text relating to a number of products into a model based on contrastive language-image pretraining (CLIP).

15. An information processing system comprising:
a self-checkout terminal;
a management terminal; and
an information processing device, wherein
the information processing device includes a control unit (150) is configured to
acquire video having a scan area of the self-checkout terminal for scanning a barcode of a product,
analyze the acquired video to detect an action of a user holding a plurality of products in the scan area of the self-checkout terminal,
set either the self-checkout terminal or the management terminal that monitors the self-checkout terminal as a terminal to be notified based on an analysis result of a type of an overlapping state of the plurality of products when the action of the user holding the plurality of products is detected,
generate alert image information corresponding to the type of the overlapping state of the plurality of products, and
cause the generated alert image information to be displayed on a display screen of the terminal set as a notification destination.
